# EUROPEAN PATENT SPECIFICATION

(11) **EP 3 991 537 B1**
(45) Date of publication and mention of the grant of the patent: **12.04.2023**
(21) Application number: 21205624.6
(22) Date of filing: 29.10.2021
(51) Int. Cl.: A01D 34/00, A01D 34/53, A01D 34/66, A01D 34/73, A01D 43/14, A01D 75/18

(54) **INTELLIGENT MOWER SYSTEM**
INTELLIGENTES MÄHERSYSTEM
SYSTÈME DE TONDEUSE INTELLIGENT

(30) Priority: 30.10.2020 CN 202011193813
(43) Date of publication of application: 04.05.2022
(73) Proprietor: Wuxi Kalman Navigation Technology Co., Ltd., Wuxi City, Jiangsu 214100 (CN)
(72) Inventor: WU, Fei, Wuxi City, 214100 (CN); WANG, Shuo, Wuxi City, 214100 (CN); ZHU, Haiwei, Wuxi City, 214100 (CN); YANG, Yangwen, Wuxi City, 214100 (CN)
(74) Representative: Cabinet Bleger-Rhein-Poupon

(56) References cited:
- CN-A- 108 718 654
- CN-A- 110 927 766
- DE-U1-202018 003 680
- US-A1- 2013 205 736
- US-B1- 10 349 576

## Description

### Technical Field

The invention relates to the field of agricultural machinery, in particular to a mower.

### Background

Intelligent mowers are being used more and more widely. Existing intelligent mowers such as contour mowers have the functions of automatic mowing and automatic charging. However, such intelligent mowers have the following drawbacks:
1. For the mower itself, the blades of existing mowers are of a disk structure which is suitable for mowing lawns with short grass, but the mowing efficiency for long grass is low; most existing mowers can only be used for cutting grass, and a small part of existing mowers have a fertilization function, but their effect is not satisfying;
2. Existing contour mowers recognize the contour of a lawn mainly by means of electromagnetic sensors, and an electronic fence wire has two terminals connected to a contour transmitting device and emits pulses at a specific frequency; a variable current across the wire generates a magnetic field, an inductor on a contour detection module of the mowers leads to a change of the voltage under the influence of the magnetic field, voltages at two terminals of the inductor are collected to confirm a contour magnetic field signal, and then, the scope of a working region of the lawn is determined. Such a contour detection scheme has the defects that the recognition and tracking of transmission pulses by the detection device are prone to being affected by a magnetic field of the field environment and other contours around; and if magnetic field interference caused by the factors such as high-tension lines exists on the field or other contours exist around the field, a contour detection signal will be abnormal, which will result in a serious accident that the mowers move out of the range of the lawn.
Mowers can e.g. be found in CN 108 718 654 A, US 10 349 576 B1, US 2013/205736 A1, CN 110 927 766 A and DE 20 2018 003680 U1.

### Summary

In view of the defects of the prior art, the objective of the invention is to provide an intelligent mower system to overcome the drawbacks of the prior art and to solve the problems that existing mowers are poor in mowing adaptability and low in efficiency and the recognition and tracking of transmission pulses by the detection device of the existing mowers are prone to interference. A contour solution based on timing of GNSS (Global Navigation Satellite System) modules of the invention is able to directly recognize matching contour transmission pulses and is high in anti-interference capacity and detection precision.

To fulfill the above technical objective, the invention provides an intelligent mower system. The technical solution adopted by the invention to fulfill the above technical objective is as follows: an intelligent mower system comprises a mower, a contour device for detecting a boundary of a lawn, and a charging pile for charging the mower, wherein the contour device comprises a contour detection device mounted on the mower, and a contour transmitting device mounted at the boundary of the lawn and corresponding to the contour detection device, the contour transmitting device is connected to a wire arranged around the boundary of the lawn, and the wire surrounds the boundary of the lawn to form an electronic fence contour and surrounds the charging pile to form a small charging pile contour;

The mower comprises a shell, a drive device, and a mowing assembly; the mowing assembly comprises a mowing shaft, a mowing drive device, and mowing blades mounted on the mowing shaft, the mowing drive device is used for driving the mowing shaft, and the mowing shaft drives the mowing blades to mow the lawn;

The mowing assembly further comprises a mowing blade holder mounted around the mowing shaft, a plurality of fixing rods are supported and mounted in the mowing blade holder, blade bars are movably mounted on the fixing rods by means of elastic guide bushings and are able to stretch out via guide holes in the mowing blade holder, and the mowing blades are mounted at ends, away from the fixing rods, of the blade bars; when the mower operates, the blade bars stretch out via the guide holes under a centrifugal effect, and then, the mowing blades mow the lawn;

The mower further comprises an auxiliary leveling device close to the mowing assembly and mounted in the shell, the auxiliary leveling device comprises a leveling drive device, and a leveling and mowing device, the leveling and mowing device comprises a leveling drive shaft arranged horizontally and a spiral mowing frame fixed around the leveling drive shaft, and leveling blades are mounted on the spiral mowing frame in a spaced manner;

GNSS modules are connected to the contour transmitting device and the contour detection device in the contour device to provide high-precision timing at a specific frequency.

Further, a fertilization and irrigation assembly is mounted in the shell of the mower and comprises a storage cavity, and a fertilization and irrigation tank communicated with the storage cavity and disposed above the spiral mowing frame, and a discharge outlet is formed in the bottom of the fertilization and irrigation tank.

Further, an inner shell located outside the mowing blade holder is further mounted in the shell of the mower, and the mowing shaft penetrates through the top of the inner shell to be connected to the mowing drive device.

Further, the mowing blade holder is a polygonal holder structure on the whole, an angle of a bottom sloping plate of the mowing blade holder with respect to a level ground is less than 30°, and an angle of a top sloping plate of the mowing blade holder with respect to the level ground is greater than 45°.

Further, the contour detection device opens a magnetic field detection window when the contour transmitting device transmits a contour pulse, so that time synchronization between the contour transmitting device and the contour detection device is realized, and the time synchronization comprises the following steps:
Step 1: generating, by PPS (Pulse Per Second) pins of the GNSS modules connected to the contour transmitting device and the contour detection device, timing pulse signals with a same cycle T and a same pulse width, and detecting, by the contour transmitting device and the contour detection device, a PPS rising edge/falling edge at a same time, wherein an offset of the timing pulse signals generated by the different GNSS modules is less than 100ns;
Step 2: keeping a time error between the contour transmitting device and the contour detection device within 100ns by means of a high-precision characteristics of PPS, and when the contour transmitting device generates a pulse, opening a magnetic field detection window of the contour detection device to collect a voltage change signal to obtain a contour intensity:
   Step 201: detecting the PPS rising edge/falling edge at a time *t*₀ and generating a pulse with a width *τ* after a delay *δₜ,* by the contour transmitting device;
   Step 202: detecting the PPS rising edge/falling edge at the time *t*₀ and opening the detection window for a time *τ* after the delay *δₜ,* by the contour detection device, so as to collect voltages within a time period from *t*₀+ *δₜ* to *t*₀+*δₜ*+*τ*, and calculating an average value *V*ₐ of the voltages collected within the time period;
   Step 203: collecting voltages within a time period without the pulse from *t*₀+*δₜ*+*τ* to a next pulse generated by the contour transmitting device, and taking an average value *V*_{b} of the voltages collected within the time period without the pulse as a noise floor for contour intensity detection; and
   Step 204: subtracting the noise floor obtained within the time period without the pulse from the average value of the voltages collected within the time period with the pulse to obtain a contour detection intensity in a current cycle: *V*=*V*ₐ-*V*_{b}.

Further, generating a pulse with a width *τ* by the contour transmitting device after a delay *δₜ* of the PPS rising edge/falling edge comprises:

From a moment when the PPS rising edge/falling edge is triggered, generating a transmission pulse and opening the magnetic field detection window respectively by single-chip microcomputers in the contour transmitting device and the contour detection device, a difference of single-chip microcomputer system clocks of which is less than a us level within one PPS pulse cycle T, after waiting for a time *δₜ* by means of a system timer.

Further, pulse transmission/detection times of adjacent contour devices are staggered by timing of the GNSS modules with the followings: the delay *δₜ* is configurable; if a delay *δ*_{*t*1} adopted by the contour transmitting device for generating the pulse is different from a delay *δ*_{*t*2} adopted by the contour detection device for opening the window, no contour signal intensity will be detected at the magnetic field detection window; and different optional configurations of *δₜ* are set, and values of *δₜ* of the adjacent contours are set to be different, so that the contour detection device is prevented from detecting an adjacent contour signal mistakenly.

Further, the GNSS modules are used for timing to provide a time mark for the small charging pile contour on the contour transmitting device to stagger transmission/detection times of the electronic fence contour and the small charging pile contour; with the followings, the configurable delay *δₜ* provides different pulse time marks for a plurality of contours on the contour transmitting device, and the charging pile of the mower is located at a boundary of an electronic fence of the lawn; in order to mark the position of the charging pile, the pulse transmission/detection times of the small charging pile contour and the electronic fence contour of the lawn are staggered; and when the contour detection device on the mower is close to a scope of a contour transmission signal, the mower obtains the position of the charging pile and takes a corresponding action.

Further, the noise floor for contour intensity detection in Step 203 is a magnetic field intensity collected within a time period with repulsion against contour pulse transmission, and is collected to determine a magnetic field intensity of an ambient environment in absence of contour pulses, and by subtracting the magnetic field intensity obtained in absence of the contour pulses in Step 203 from the contour magnetic field intensity collected in Step 202, an influence of a magnetic field around on a contour detection effect is reduced.

Further, the configurable delay *δₜ* provides different detection start time marks for a plurality of magnetic field detection sensors on the contour detection device by the followings:

2-3 inductors for detecting positions of different parts of a trolley with respect to a contour are mounted on the mower and comprise a left inductor, a right inductor and an optional middle inductor, wherein the left inductor and the right inductor are located on two sides of a central line of the trolley of the mower, the middle inductor is close to the central line of the trolley, and within one detection cycle, magnetic field detection windows of the left inductor, the right inductor and the middle inductor are opened when the delay *δₜ* is *δₜₗ, δₜᵣ* and *δₜₘ* respectively, so as to obtain magnetic field intensities sensed by all the inductors on the detection device.

Compared with the prior art, the mower of the invention has the following advantages:
1. In the invention, the mowing blades of the mower are mounted on the stretchable blade bars, and the blade bars stretch or retreat freely according to the mowing speed, so that the blades are prevented from being broken or damaged when the mowing resistance is large, and the life of the mower is prolonged; a plurality of layers of mowing blades are adopted, and the special polygonal blade holder structure is used, so that efficient mowing is realized;
2. The mowing assembly of the invention can guide, absorb and chop grass by means of a specific blade holder structure and an inner shell structure, and can sufficiently and rapidly cut long and short grass by means of a plurality of layers of mowing blades, so that the grass is prevented from entwined, and the mower is protected;
3. The auxiliary leveling device is arranged to realize secondary cutting and fine trimming, which is particularly suitable for trimming lawns with high requirements; a spiral mowing frame structure capable of stretching deep into a lawn for trimming is adopted, so that the effect is good, the trimming resistance is small, and the efficiency is high; an optimized tubular blade holder structure capable of assisting in fertilization and irrigation is adopted, so that the functional integrity is high;
4. The fertilization and irrigation assembly is arranged to assist in leveling and evenly guide fertilizer and water to the bottom of a lawn by means of the guide effect of the spiral mowing frame, so that the effect is extremely good;
5. According to the GNSS timing-based contour transmitting and detection method provided by the invention, a time synchronization error of the contour transmitting device and the contour detection device is less than the us level based on GNSS high-precision timing, and the magnetic field detection window of the detection device is opened when a contour pulse is transmitted; contour devices around are made to avoid the current contour pulse transmission and the current detection window, so that interference from the contour devices around is avoided; the transmission/detection windows of the electronic fence contour and the small charging pile contour also avoid each other, so that signal interference between the electronic fence contour and the small charging pile contour is avoided. Within a time in absence of contour transmission pulses, the magnetic field detection window of the detection device is opened to acquire magnetic field noise in the idle time, so that the influence of the field environment on the contour detection effect is reduced.

### Brief Description of the Drawings

FIG. 1 is an overall framework diagram of the invention;
FIG. 2 is a structural diagram of a mower of the invention;
FIG. 3 is an enlarged view of part A in FIG. 2;
FIG. 4 is a schematic diagram of another embodiment of a mowing blade of the invention;
FIG. 5 is a partial view of the installation of a blade bar of the invention;
FIG. 6 is a partial view of a spiral mowing frame according to one embodiment of the invention;
FIG. 7 is a schematic diagram of an overall control part of the invention;
FIG. 8 is a schematic diagram attached to the abstract of the specification of the invention;
FIG. 9 is a schematic diagram of the difference between timing pulse signals generated by different GNSS modules used for timing;
FIG. 10 is a schematic diagram for avoiding adjacent contour pulses;
FIG. 11 is a schematic diagram for staggering pulse times of a small charging pile contour and an electronic fence contour;
FIG. 12 is a schematic diagram of opened magnetic field detection windows of a plurality of inductors on a mower;
FIG. 13 is a diagram of a specific embodiment;

### Detailed Description of Embodiments

To make the structure and advantages of the invention clearer, the structure of the invention will be further described below in conjunction with the accompanying drawings.

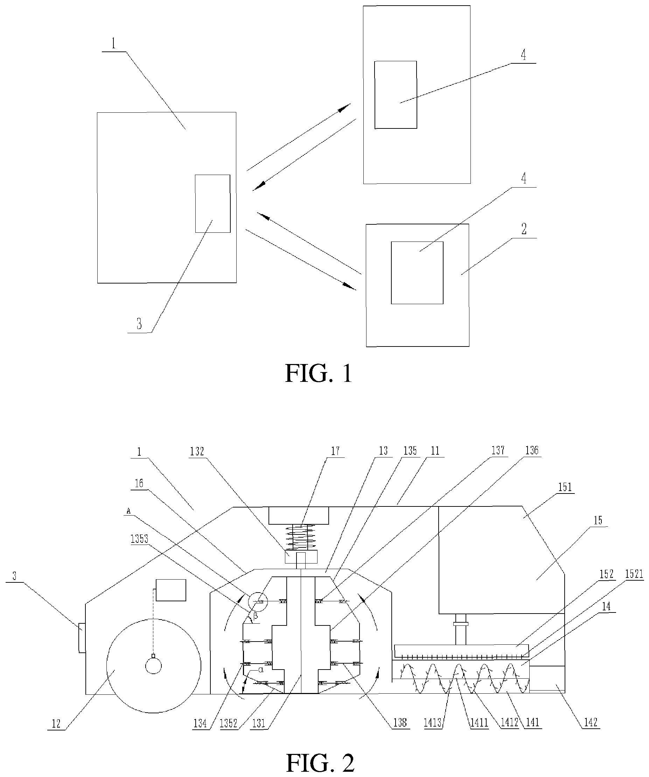

FIGS. 1-7 show schematic diagrams of an intelligent mower system of the invention.

The invention provides an intelligent mower system, comprising a mower 1, a contour device for detecting the boundary of a lawn, and a charging pile 2 for charging the mower, wherein the contour device comprises a contour detection device 3 mounted on the mower and a contour transmitting device 4 mounted at the boundary of the lawn and corresponding to the contour detection device 3, the contour transmitting device 4 is connected to a wire arranged around the boundary of the lawn, and the wire surrounds the boundary of the lawn to form an electronic fence contour and surrounds the charging pile to form a small charging pile contour.

As shown in FIG. 2, the mower 1 comprises a shell 11, a drive device 12, and a mowing assembly 13; the mowing assembly 13 comprises a mowing shaft 131, a mowing drive device 132, and mowing blades 134 mounted on the mowing shaft 131; the mowing drive device 132 is used for driving the mowing shaft 131, and the mowing shaft 131 drives the mowing blades 134 to mow the lawn; and the drive device 12 of the mower of the invention belongs to the prior art, so the specific structure of the drive device 12 is not shown in detail in the figures. To protect the mowing assembly 13, the mowing assembly 13 is mounted in the shell 11 through a buffer structure 17, and the butter structure 17 is a common structure such as a spring or other buffer elements.

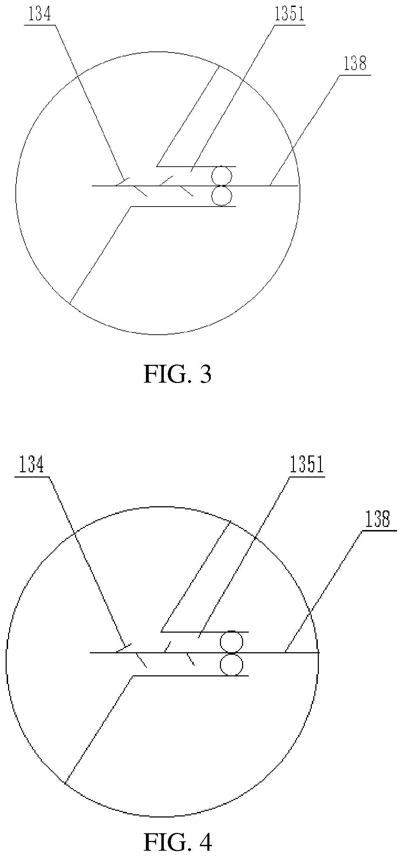

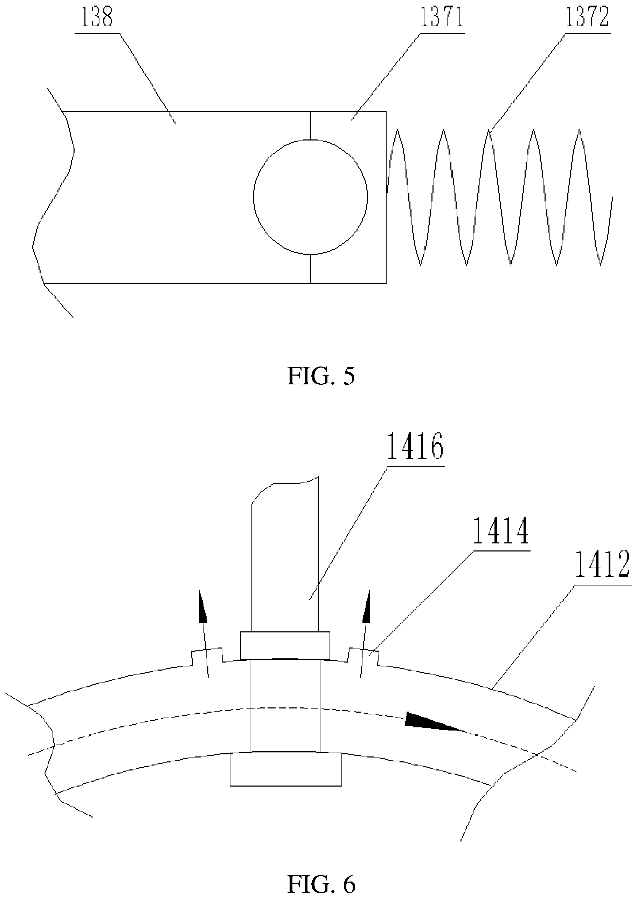

As shown in FIG. 2 and FIG. 3, the mowing assembly 13 further comprises a mowing blade holder 135 mounted around the mowing shaft 131, a plurality of fixing rods 136 that are spaced apart from each other in a vertical direction are supported and mounted in the mowing blade holder 135, blade bars 138 are movably mounted on the fixing rods 136 by means of elastic guide bushings 137 and are able to stretch out via guide holes 1351 in the mowing blade holder 135, and the mowing blades 134 are mounted at ends, away from the fixing rods 136, of the blade bars 138; when the mower 1 operates, the blade bars 138 stretch out of the guide holes 1351 under the centrifugal effect, and then the mowing blades 134 mow the lawn; and the blade bars 138 are guided in the guide holes 1351 by means of linear bearings or common upper and lower guide wheels. To realize efficient mowing, the mowing blades 134 are obliquely arranged with respect to an axial direction of the blade bars 138, and angles between the mowing blades 134 and the blade bars 138 are 15°-90°. Preferably, on the same blade bar 138, the angles between the adjacent mowing blades 134 and the blade bar are different, as shown in FIG. 4. As shown in FIG. 5 which is a schematic diagram of the elastic guide bushing 137, the elastic guide bushing 137 is simple in structure, a spring sleeve 1371 is connected to an end of the blade bar 138 by means of a ball, a spring is connected to an end of the spring sleeve 1371, and the blade bar 138 is non-directionally mounted in a socket of the elastic guide bushing 137 and is able to rotate freely in the socket. When the mower operates, the mowing drive device 132 drives the mowing shaft 131 to rotate at a high speed, and the blade bars 138 stretch out of the mowing blade holder 135 along the guide holes 1351 under the centrifugal effect and are able to rotate to realize efficient mowing; when the mower is used to cut grass with large resistance, the rotation speed of the mowing shaft 131 decreases, the blade bars 138 retreat properly to decrease the length of the blade bars in contact with the grass, and thus, the blades and the blade bars are protected against breakage.

As shown in FIG. 2, the mower 1 of the invention further comprises an auxiliary leveling device 14 close to the mowing assembly 13 and mounted in the shell 11. The auxiliary leveling device 14 comprises a leveling drive device 142 and a leveling and mowing device 141, the leveling and mowing device 141 comprises a leveling drive shaft 1411 and a spiral mowing frame 1412 fixed around the leveling drive shaft 1411, and leveling blades 1413 are mounted on the spiral mowing frame 1412 in a spaced manner. The auxiliary leveling device 14 is used for fine trimming, such as leveling the lawn, after grass is preliminarily cut, and is also used for trimming redundant grass, such that trimming without residues is realized, and the efficiency is higher. The structure of the spiral mowing frame 1412 of the invention is pioneering in the art. Preferably, the leveling blades 1413 of the invention are obliquely arranged on the spiral mowing frame 1412, so that the cutting efficiency is high.

As shown in FIG. 2, a fertilization and irrigation assembly 15 is mounted in the shell 11 of the mower 1 and comprises a storage cavity 151 and a fertilization and irrigation tank 152 communicated with the storage cavity 151 and disposed above the spiral mowing frame 1412, and a discharge outlet 1521 is formed in the bottom of the fertilization and irrigation tank 152. When the intelligent mower system is used for a lawn needing to be fertilized after grass is cut, granular or liquid fertilizer is stored in the storage cavity 151; and when the spiral mowing frame 1412 rotates for trimming, the fertilizer leaks via the discharge outlet 1521 to be uniformly sprayed onto the lawn. The fertilization and irrigation tank 152 is further provided with an electromagnetic valve, which is not shown in the figures. Preferably, to realize fertilization and irrigation more efficiently, as shown in FIG. 6, the spiral mowing frame 1412 of the invention may be a hollow tube structure and be communicated with the leveling drive shaft 1411, lead holes 1414 are formed in a tube wall of the spiral mowing frame 1412 and are located in two sides of a blade holder 1416 where the leveling blades are mounted, and the leading effect is shown by the arrows in FIG. 6. The storage cavity 151 is communicated with an end of the leveling drive shaft 1411 by means of a pipeline, which is a common practice and will no longer be specifically shown in the figures.

An inner shell 16 located outside the mowing blade holder 135 is further mounted in the shell 11 of the mower, and the mowing shaft 131 penetrates through the top of the inner shell 16 to be connected to the mowing drive device 132. The inner shell 16 is a closed structure having a lower end formed with an opening, so that chopped grass is prevented from splashing everywhere after being cut, and a guide effect is realized, as shown by the arrows in FIG. 2; and long grass is guided upwards to be further chopped after being cut, so as to be collected later; and the grass is prevented from being entwined, so that equipment is protected.

The mowing blade holder 135 is a polygonal holder structure on the whole, an angle α of a bottom sloping plate 1352 of the mowing blade holder 135 with respect to the level ground is less than 30°, and an angle β of a top sloping plate 1353 of the mowing blade holder 135 with respect to the level ground is greater than 45°. Through the cooperation of the top and bottom sloping plates of the mowing blade holder 135 and the inner shell 16, chopped grass can be guided, and thus, efficient work is realized.

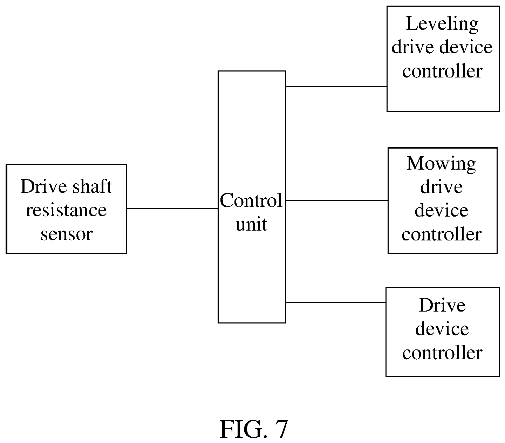

In the invention, to further improve the safety and reliability during work, a resistance sensor is mounted on a drive shaft of the drive device 12 and is connected to a system control unit, and the system control unit is in signal connection with a mowing drive device controller, a drive device controller and a leveling drive device controller correspondingly. When a resistance value detected by the resistance sensor is greater than a set threshold, the control unit sends instructions to the corresponding controllers to decrease the drive speeds of the drive devices, so that real-time speed control is realized. FIG. 7 illustrates a schematic diagram of the control structure.

In the contour device of the intelligent mowing system of the invention, GNSS modules are connected to the contour transmitting device and the contour detection device respectively and provide high-precision timing at a specific frequency. The GNSS modules provide high-precision PPS timing pulse signals, and an offset between the timing pulse signals provided by different GNSS modules is less than 100ns. When the GNSS modules connected to the contour transmitting device and the contour detection device provide high-precision timing, the contour detection device opens a magnetic field detection window while the contour transmitting device transmits a contour pulse, so that time synchronization between the contour transmitting device and the contour detection device is fulfilled; at this moment, other contour devices around are enabled to avoid the current contour pulse transmission and the current detection window, so that interference from the contour devices around is avoided; and transmission/detection windows of the electronic fence contour and the small charging pile contour also avoid each other, so that signal interference between the electronic fence contour and the small charging pile contour is avoided.

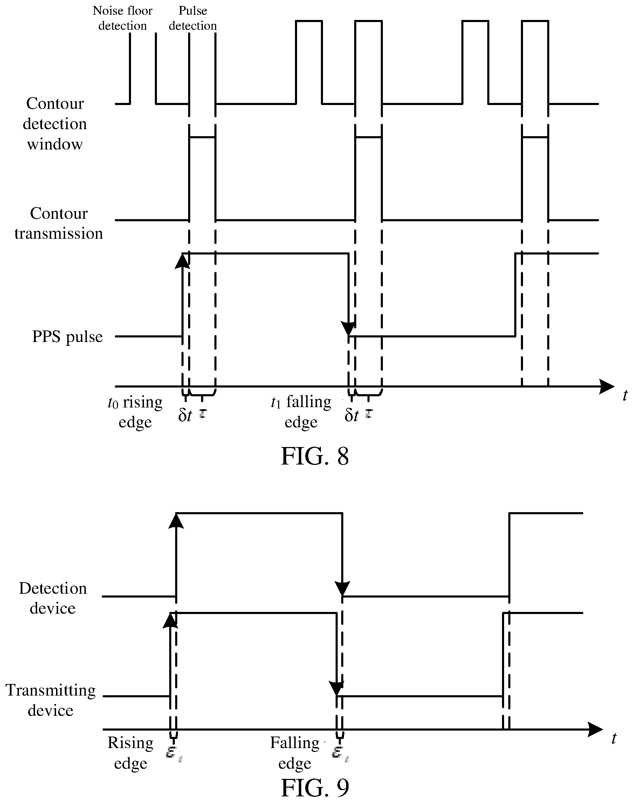

As shown in FIG. 8, the time synchronization between the contour transmitting device and the contour detection device is fulfilled through the following steps:
Step 1: PPS pins of the GNSS modules connected to the contour transmitting device and the contour detection device generate PPS timing pulse signals with the same cycle T and the same width, and the contour transmitting device and the contour detection device detect a PPS rising edge/falling edge at the same time (a time error *εₜ* is within 100ns, as shown in FIG. 9);
Step 2: the time error between the contour transmitting device and the contour detection device is kept within 100ns by means of the high-precision characteristic of PPS; from the moment when the PPS rising edge/falling edge is triggered, single-chip microcomputers, a difference between system clocks of which is less than a us level within one PPS pulse cycle T, in the contour transmitting device and the contour detection device generate a transmission pulse and open a detection window respectively after waiting for a time *δt* by means of a system timer; when the contour transmitting device generates the pulse, the magnetic field detection window of the contour detection device is opened to collect a voltage change signal to obtain a contour intensity;
Step 201: when detecting the PPS rising edge/falling edge at a time *t*₀, the contour transmitting device generates a pulse with a width *τ* after a delay *δt*;
Step 202: when detecting the PPS rising edge/falling edge at the time *t*₀, the contour detection device opens the detection window for a time *τ* to collect voltages within a time period from *t*₀+*δt* to *t*₀+*δt*+*τ* after the delay *δt,* and an average value *V*ₐ of the voltages collected within the time period is calculated;
Step 203: voltages within a time period without the pulse from *t*₀+*δt*+*τ* to a next pulse generated by the contour transmitting device are collected, and an average value *V*_{b} of the voltages is taken as a noise floor for contour intensity detection; and
Step 204: the noise floor obtained within the time period without the pulse is subtracted from the average value of the voltages collected within the time period with the pulse to obtain a contour detection intensity in a current cycle: *V*=*V*ₐ-*V*_{b}.

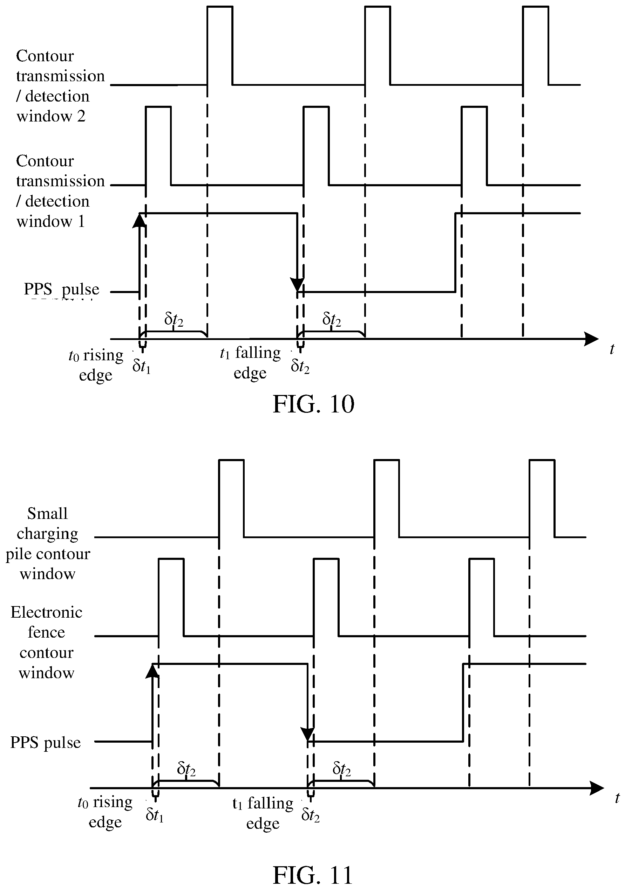

The delay *δt* in Step 2 is configurable; if a delay *δt*₁ adopted by the contour transmitting device to generate the pulse is different from a delay *δt*₂ adopted by the contour detection device to open the window, no contour signal intensity will be detected at the magnetic field detection window. By means of this characteristic, different optional configurations of *δt* are set, and different values are set for the delay *δt* of adjacent contours, so that the situation where the contour detection device detects an adjacent contour signal mistakenly, and consequentially, a serious accident that the mower is out of the range of the lawn is caused is avoided, and the anti-interference capacity between the adjacent contours is improved. As shown in FIG. 10, the contour transmitting device 1, the contour detection device 1, the contour transmitting device 2 and the contour detection device 2 detect the PPS rising edge at the time *t*₀; after the delay *δt*₁*,* the contour transmitting device 1 transmits a pulse with a width *τ*, and the contour detection device 1 collects a contour signal 1 within a time period from *t*₀+*δt*₁ to *t*₀+*δt*₁+*τ* ; from the time *t*₀, the contour transmitting device 2 transmits a pulse with a width *τ* after a delay *δt*₂(*δt*₂>*δt*₁+*τ*), and the contour detection device 2 collects a contour signal 2 within a time period from *t*₀+*δt*₂ to t₀+ *t*₀+*δt*₂+*τ*.

In addition, the configurable *δt* provides different pulse time marks for a plurality of contours on the transmitting device; the charging pile of the mower is located at the boundary of an electronic fence of the lawn; to mark the position of the charging pile and prevent the mower from colliding against the charging pile, the charging pile is surrounded by a small contour, and the pulse transmission and detection time of the small contour is staggered with the pulse transmission and detection time of the electronic fence of the lawn; magnetic field intensities of the electronic fence and the small charging pile contour are obtained within one contour detection cycle; when the contour detection device on the mower is close to the scope of a contour transmission signal, the mower obtains the position of the charging pile and takes a corresponding action. As shown in FIG. 11, the contour transmitting device and the contour detection device detect the rising PPS rising edge at the time *t*₀; after a delay *δt*₁*,* the contour transmitting device transmits an electronic fence contour pulse with a width *τ*, and the contour detection device collects an electronic fence contour signal within a time period from *t*₀+*δt*₁ to *t*₀+*δt*₁+*τ*; after a delay *δt*₂(*δt*₂>*δt*₁+*τ*) from the time *t*₀, the contour transmitting device transmits a small charging pile contour pulse with a width *τ*, and at the same time, the contour detection device collects a small charging pile contour signal within a time period from *t*₀+*δt*₂ to *t*₀+*δt*₂+*τ*.

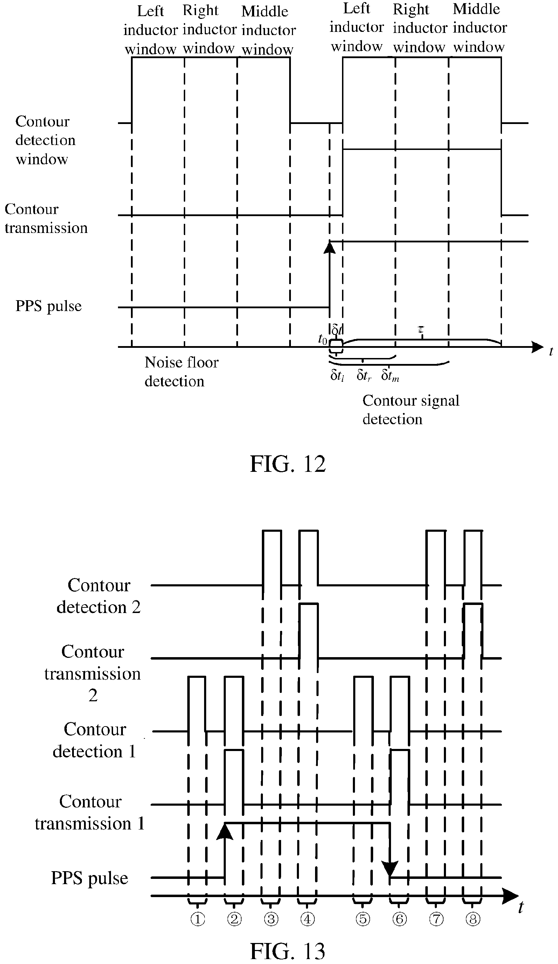

Besides, the configurable *δt* provides different detection start time marks for a plurality of magnetic field detection sensors on the detection device: to more accurately determine the positional relation between a trolley and a contour, 2-3 inductors are mounted on the mower to detect the positions of different parts of the trolley with respect to the contour, and include a left inductor, a right inductor and an optional middle inductor, wherein the left inductor and the right inductor are located on two sides of a central line of the trolley, and the middle inductor is close to the central line of the trolley; within one detection cycle, magnetic field detection windows of the left inductor, the right inductor and the middle inductor are opened when the delay *δt* is *δtₗ*, *δtᵣ* and *δtₘ* respectively, so as to obtain magnetic field intensities sensed by all the inductors on the detection device. As shown in FIG. 12, the contour transmitting device and the contour detection device detect the PPS rising edge at the time t₀; after a delay *δt,* the contour transmitting device transmits a pulse with a width *τ*, and the contour detection device collects a signal from the left inductor within a time period from *t*₀+*δtₗ* to *t*₀+*δtᵣ*(*δtₗ* = *δt*), collects a signal from the right inductor within a time period from *t*₀+*δtᵣ* to *t*₀+*δtₘ*, and collects a signal from the middle inductor within a time period from*t*₀+*δtₘ* to *t*₀+*δt*+*τ*.

The noise floor for contour intensity detection in Step 203 is used to collect a magnetic field intensity signal within a time period with repulsion against contour pulse transmission, and is acquired to determine the magnetic field intensity of an ambient environment in absence of contour pulses, and by subtracting the magnetic field intensity obtained in absence of contour pulses in Step 203 from the contour magnetic field intensity collected in Step 202, the influence of a magnetic field around on the contour detection effect is reduced. The GNSS modules provide PPS timing pulse signals at a specific frequency, and an offset between the pulse signals provided by the different GNSS modules is less than 100ns. When the GNSS modules connected to the contour transmitting device and the contour detection device provide high-precision timing, the contour detection device open a magnetic field detection window while the contour transmitting device transmits a contour pulse, so that time synchronization between the contour transmitting device and the contour detection device is fulfilled. Assume the delays *δt* of the two sets of contour transmitting/receiving devices are different, the anti-interference capacity between different contours is guaranteed; and the transmitting/detection windows of the electronic fence contour and the small charging pile contour are avoided, so that signal interference between the electronic fence contour and the small charging pile contour is avoided. As shown in FIG. 13, the specific steps are as follows:
Step 1: PPS pins of the GNSS modules connected to the contour transmitting devices and the contour detection devices generate PPS timing pulse signals with the same cycle T and the same width, and the contour transmitting devices and the contour detection devices detect a PPS rising edge/falling edge at the same time;
Step 2: a time error between the contour transmitting devices and the contour detection devices is kept within 100ns by means of the high-precision characteristic of PPS; from the moment when the PPS rising edge/falling edge is triggered, a difference between system clocks of which is less than a us level within one PPS pulse cycle T, single-chip microcomputers in the contour transmitting device and the contour detection device generate a transmission pulse and open a detection window respectively after waiting for a time *δt* by means of a system timer; when the contour transmitting device generates the pulse, the magnetic field detection window of the contour detection device is opened to collect a voltage change signal to obtain a contour intensity;
Step 201: the contour transmitting devices 1, 2 and the contour detection devices 1, 2 synchronously detect a rising edge of a PPS timing pulse signal within a time period ②; before the rising edge is triggered, an electronic fence noise floor detection window of the contour detection device 1 is opened within a time period ① to obtain a noise floor signal *V*_{*b*1} within the time period ①;
Step 202: a delay of the contour transmitting/detection device 1 is made to meet *δt*₁=0*,* and at the moment when the PPS rising edge is triggered, a contour pulse of the electronic fence 1 is transmitted within the time period ② for a time *τ*;
Step 203: within the time period ②, the contour detection device 1 opens a detection window to collect voltage signals V_{*l*1}, *V*_{*r*1}, *V*_{*m*1} of the left inductor, the right inductor and the middle inductor within this time period, and intensities of the electronic fence contour detected by the three inductors on the detection device are *V*_{*l*1}*-V*_{*b*1}, *V*_{*r*1}*-V*_{*b*1} and *V*_{*m*1}*-V*_{*b*1} respectively;
Step 204: within a time period ③, a contour noise floor detection window of the contour detection device 2 is opened to obtain a noise floor signal *V*_{*b*2} within the time period ③;
Step 205: within a time period ④, the contour transmitting device 2 transmits a contour pulse for a time *τ*;
Step 206: within the time period ④, the contour detection device 2 opens a detection window to collect voltage signals *V*_{*l*2}, *V*_{*r*2}, *V*_{*m*2} of the left inductor, the right inductor and the middle inductor within this time period, and intensities of the electronic fence contour detected by the three inductors on the detection device are *V*_{*l*2}*-V*_{*b*2}*, V*_{*r*2}*-V*_{*b*2} and *V*_{*m*2}*-V*_{*b*2} respectively;
Step 207: the contour transmitting devices 1, 2 and the contour detection devices 1, 2 synchronously detect a falling edge of the PPS timing pulse signal within a time period ⑥; before the falling edge is triggered, a noise floor detection window for the small charging pile contour of the contour detection device 1 is opened within a time period ⑤ to obtain a noise floor signal *V*_{*b*1}' within the time period (5);
Step 208: the delay of the contour transmitting/detection device 1 is made to meet *δt*₁=0*,* and at the moment when the PPS falling edge is triggered, the transmitting device 1 transmits a contour pulse of the small charging pile contour within the time period ⑥ for a time *τ* ;
Step 209: within the time period ⑥, the contour detection device 1 opens the detection window to collect voltage signals *V*_{*l*1}*', V*_{*r*1}*', V*_{*m*1}*'* of the left inductor, the right inductor and the middle inductor within this time period, and intensities of the small charging pile contour detected by the three inductors on the detection device are *V*_{*l*1}'-*V*_{*b*1}', *V*_{*r*1}'-*V*_{*b*1}' and *V*_{*m*1}*' - V*_{*b*1}' respectively;
Step 210: within a time period ⑦, a noise floor detection window for the small charging pile contour of the contour detection device 2 is opened to obtain a noise floor signal *V*_{*b*2}' within the time period ⑦;
Step 211: within a time period ⑧, the contour transmitting device 2 transmits a small charging pile contour pulse for a time *τ* ; and
Step 212: within the time period ⑧, the contour detection device 2 opens the detection window to collect voltage signals *V*_{*l*2}'*, V*_{*r*2}'*, V*_{*m*2}' of the left inductor, the right inductor and the middle inductor within this time period, and intensities of the small charging pile contour detected by the three inductors on the detection device are *V*_{*l*2}*'-V*_{*b*2}*', V*_{*r*2}*'-V*_{*b*2}*'* and *V*_{*m*2}'*-V*_{*b*2}' respectively.

## Claims

1. An intelligent mower system, comprising a mower (1), a contour device for detecting a boundary of a lawn, and a charging pile (2) for charging the mower (1), the contour device comprising a contour detection device (3) mounted on the mower (1), and a contour transmitting device (4) mounted at the boundary of the lawn and corresponding to the contour detection device (3), the contour transmitting device (4) being connected to a wire arranged around the boundary of the lawn, and the wire surrounding the boundary of the lawn to form an electronic fence contour and surrounding the charging pile (2) to form a small charging pile contour;
the mower (1) comprising a shell (11), a drive device (12), and a mowing assembly (13); the mowing assembly (13) comprising a mowing shaft (131), a mowing drive device (132), and mowing blades (134) mounted on the mowing shaft (131), the mowing drive device (132) being used for driving the mowing shaft (131), and the mowing shaft (131) driving the mowing blades (134) to mow the lawn;
wherein:
the mowing assembly (13) further comprises a mowing blade holder (135) mounted around the mowing shaft (131), a plurality of fixing rods (136) are supported and mounted in the mowing blade holder (135), blade bars (138) are movably mounted on the fixing rods (136) by means of elastic guide bushings (137) and are able to stretch out via guide holes (1351) in the mowing blade holder (135), and the mowing blades (134) are mounted at ends, away from the fixing rods (136), of the blade bars (138); when the mower operates, the blade bars (138) stretch out via the guide holes (1351) under a centrifugal effect, and then, the mowing blades (134) mow the lawn;
the mower further comprises an auxiliary leveling device (14) close to the mowing assembly (13) and mounted in the shell (11), the auxiliary leveling device (14) comprises a leveling drive device (142), and a leveling and mowing device (141), the leveling and mowing device (141) comprises a leveling drive shaft (1411) arranged horizontally and a spiral mowing frame (1412) fixed around the leveling drive shaft (1411), and leveling blades (1413) are mounted on the spiral mowing frame (1412) in a spaced manner;
GNSS modules are connected to the contour transmitting device and the contour detection device (3) in the contour device to provide high-precision timing at a specific frequency.

2. The intelligent mower system according to Claim 1, wherein a fertilization and irrigation assembly (15) is mounted in the shell (11) of the mower (1) and comprises a storage cavity (151), and a fertilization and irrigation tank (152) communicated with the storage cavity (151) and disposed above the spiral mowing frame (1412), and a discharge outlet (1521) is formed in a bottom of the fertilization and irrigation tank (152).

3. The intelligent mower system according to Claim 1, wherein an inner shell (16) located outside the mowing blade holder (135) is mounted in the shell (11) of the mower (1), and the mowing shaft (131) penetrates through a top of the inner shell (16) to be connected to the mowing drive device (132).

4. The intelligent mower system according to Claim 1, wherein the mowing blade holder (135) is a polygonal holder structure on the whole, an angle of a bottom sloping plate (1352) of the mowing blade holder (135) with respect to a level ground is less than 30°, and an angle of a top sloping plate (1353) of the mowing blade holder (135) with respect to the level ground is greater than 45°.

5. The intelligent mower system according to Claim 1, wherein the contour detection device (3) opens a magnetic field detection window when the contour transmitting device (4) transmits a contour pulse, so that time synchronization between the contour transmitting device (4) and the contour detection device (3) is realized, and the time synchronization comprises the following steps:
Step 1: generating, by PPS pins of the GNSS modules connected to the contour transmitting device (4) and the contour detection device (3), timing pulse signals with a same cycle T and a same pulse width, and detecting, by the contour transmitting device (4) and the contour detection device (3), a PPS rising edge/falling edge at a same time, wherein an offset of the timing pulse signals generated by different GNSS modules is less than 100ns;
Step 2: keeping a time error between the contour transmitting device (4) and the contour detection device (3) within 100ns by means of a high-precision characteristics of PPS, and when the contour transmitting device (4) generates a pulse, opening a magnetic field detection window of the contour detection device (3) to collect a voltage change signal to obtain a contour intensity:
Step 201: detecting the PPS rising edge/falling edge at a time *t*₀ and generating a pulse with a width *τ* after a delay *δₜ,* by the contour transmitting device (4);
Step 202: detecting the PPS rising edge/falling edge at the time *t*₀ and opening the detection window for a time *τ* after the delay *δₜ,* by the contour detection device (3), so as to collect voltages within a time period from *t*₀+*δₜ* to *t*₀+*δₜ*+*τ,* and calculating an average value *V*ₐ of the voltages collected within the time period;
Step 203: collecting voltages within a time period without the pulse from *t*₀+*δₜ*+*τ* to a next pulse generated by the contour transmitting device (4), and taking an average value *V*_{b} of the voltages collected within the time period without the pulse as a noise floor for contour intensity detection; and
Step 204: subtracting the noise floor obtained within the time period without the pulse from the average value of the voltages collected within the time period with the pulse to obtain a contour detection intensity in a current cycle: *V*=*V*ₐ-*V*_{b}.

6. The intelligent mower system according to Claim 5, wherein generating a pulse with a width *τ* by the contour transmitting device (4) after a delay *δₜ* of the PPS rising edge/falling edge comprises:
from the moment when the PPS rising edge/falling edge is triggered, generating a transmission pulse and opening the magnetic field detection window respectively by single-chip microcomputers in the contour transmitting device (4) and the contour detection device (3), a difference of single-chip microcomputers system clocks of which is less than a us level within one PPS pulse cycle T, after waiting for a time *δₜ* by means of a system timer.

7. The intelligent mower system according to Claim 6, wherein pulse transmission/detection times of adjacent contour devices are staggered by timing of the GNSS modules, with the followings: the delay *δₜ* is configurable; if a delay *δt*₁ adopted by the contour transmitting device (4) for generating the pulse is different from a delay *δt*₂ adopted by the contour detection device (3) for opening the window, no contour signal intensity will be detected at the magnetic field detection window; and different optional configurations of *δt* are set, and values of *δt* of the adjacent contours are set to be different, so that the contour detection device (3) is prevented from detecting an adjacent contour signal mistakenly.

8. The intelligent mower system according to Claim 5, wherein the GNSS modules are used for timing to provide a time mark for the small charging pile contour on the contour transmitting device (4) to stagger transmission/detection times of the electronic fence contour and the small charging pile contour; with the followings: the configurable delay *δt* provides different pulse time marks for a plurality of contours on the contour transmitting device (4), and the charging pile (2) of the mower (1) is located at a boundary of an electronic fence of the lawn; in order to mark a position of the charging pile (2), the pulse transmission/detection times of the small charging pile contour and the electronic fence contour of the lawn are staggered; and when the contour detection device (3) on the mower (1) is close to a scope of a contour transmission signal, the mower (1) obtains the position of the charging pile (2) and takes a corresponding action.

9. The intelligent mower system according to Claim 5, wherein the noise floor for contour intensity detection in Step 203 is a magnetic field intensity collected within a time period with repulsion against contour pulse transmission, and is collected to determine a magnetic field intensity of an ambient environment in absence of contour pulses, and by subtracting the magnetic field intensity obtained in absence of the contour pulses in Step 203 from the contour magnetic field intensity collected in Step 202, an influence of a magnetic field around on a contour detection effect is reduced.

10. The intelligent mower system according to Claim 5, wherein the configurable delay *δt* provides different detection start time marks for a plurality of magnetic field detection sensors on the contour detection device (3) by the following:
2-3 inductors for detecting positions of different parts of a trolley with respect to a contour are mounted on the mower (1) and comprise a left inductor, a right inductor and an optional middle inductor, wherein the left inductor and the right inductor are located on two sides of a central line of the trolley of the mower (1), the middle inductor is close to the central line of the trolley, and within one detection cycle, magnetic field detection windows of the left inductor, the right inductor and the middle inductor are opened when the delay *δt* is *δtₗ, δtᵣ* and *δtₘ* respectively, so as to obtain magnetic field intensities sensed by all the inductors on the detection device (3).

## Patentansprüche

1. Intelligentes Rasenmähsystem, umfassend einen Rasenmäher (1), eine Konturvorrichtung zum Erkennen einer Begrenzung eines Rasens und eine Ladestation (2) zum Aufladen des Rasenmähers (1), wobei die Konturvorrichtung eine Konturerkennungsvorrichtung (3), die an dem Rasenmäher (1) angebracht ist, und eine Kontursendevorrichtung (4) umfasst, die an der Begrenzung des Rasens angebracht ist und der Konturerkennungsvorrichtung (3) entspricht, wobei die Kontursendevorrichtung (4) mit einem Draht verbunden ist, der um die Begrenzung des Rasens angeordnet ist, und der Draht die Begrenzung des Rasens so umgibt, dass er eine Kontur eines elektronischen Zauns bildet, und die Ladestation (2) so umgibt, dass er eine kleine Ladestationskontur bildet;
wobei der Rasenmäher (1) ein Gehäuse (11), eine Antriebsvorrichtung (12) und eine Mähbaugruppe (13) umfasst; wobei die Mähbaugruppe (13) eine Mähwelle (131), eine Mähantriebsvorrichtung (132) und Mähmesser (134) umfasst, die an der Mähwelle (131) angebracht sind, wobei die Mähantriebsvorrichtung (132) zum Antreiben der Mähwelle (131) dient und die Mähwelle (131) die Mähmesser (134) zum Mähen des Rasens antreibt;
wobei:
die Mähbaugruppe (13) ferner einen Mähmesserhalter (135), der um die Mähwelle (131) herum angebracht ist, eine Vielzahl von Fixierungsstangen (136), die in dem Mähmesserhalter (135) getragen werden und daran angebracht sind, Messerleisten (138), die mithilfe von elastischen Führungshülsen (137) beweglich an den Fixierungsstangen (136) angebracht sind und durch Führungslöcher (1351) in dem Mähmesserhalter (135) ausfahren können, wobei die Mähmesser (134) an den von den Fixierungsstangen (136) entfernten Enden der Messerleisten (138) angebracht sind; wobei die Messerleisten (138) im Betrieb des Rasenmähers mittels Zentrifugalwirkung aus den Führungslöcher (1351) ausfahren und die Mähmesser (134) so den Rasen mähen;
wobei der Rasenmäher ferner eine Nivellierungshilfsvorrichtung (14) nahe der Mähbaugruppe (13) umfasst, die im Gehäuse (11) angebracht ist, wobei die Nivellierungshilfsvorrichtung (14) eine Nivellierungsantriebsvorrichtung (142) und eine Nivellierungs- und Mähvorrichtung (141) umfasst, die Nivellierungs- und Mähvorrichtung (141) eine horizontal angeordnete Nivellierungsantriebswelle (1411) und einen spiralförmigen Mährahmen (1412) umfasst, der um die Nivellierungsantriebswelle (1411) fixiert ist, wobei Nivelliermesser (1413) voneinander beabstandet an dem spiralförmigen Mährahmen (1412) angebracht sind;
wobei GNSS-Module mit der Kontursendevorrichtung und der Konturerkennungsvorrichtung (3) in der Konturvorrichtung verbunden sind, um eine hochpräzise Taktung mit einer spezifischen Frequenz bereitzustellen.

2. Intelligentes Rasenmähsystem nach Anspruch 1, wobei eine Dünge- und Bewässerungsbaugruppe (15) im Gehäuse (11) des Rasenmähers (1) angebracht ist und einen Aufnahmehohlraum (151) umfasst, wobei ein Dünge- und Bewässerungstank (152) mit dem Aufnahmehohlraum (151) in Verbindung steht und über dem spiralförmigen Mährahmen (1412) angeordnet ist, und ein Abgabeauslass (1521) an einem Boden des Dünge- und Bewässerungstanks (152) gebildet ist.

3. Intelligentes Rasenmähsystem nach Anspruch 1, wobei ein Innengehäuse (16), das sich außerhalb des Mähmesserhalters (135) befindet, im Gehäuse (11) des Rasenmähers (1) angebracht ist und die Mähwelle (131) zum Verbinden mit der Mähantriebsvorrichtung (132) durch eine Oberseite des Innengehäuses (16) verläuft.

4. Intelligentes Rasenmähsystem nach Anspruch 1, wobei der Mähmesserhalter (135) insgesamt eine polygonale Haltestruktur ist, ein Winkel einer schrägen Bodenplatte (1352) des Mähmesserhalters (135) in Bezug auf einen ebenen Erdboden weniger als 30° beträgt und ein Winkel einer schrägen Oberseitenplatte (1353) des Mähmesserhalters (135) in Bezug auf den ebenen Erdboden größer als 45° ist.

5. Intelligentes Rasenmähsystem nach Anspruch 1, wobei die Konturerkennungsvorrichtung (3) ein Magnetfelderfassungsfenster öffnet, wenn die Kontursendevorrichtung (4) einen Konturimpuls sendet, sodass eine Synchronisation zwischen der Kontursendevorrichtung (4) und der Konturerkennungsvorrichtung (3) erzielt wird, wobei die Synchronisation folgende Schritte umfasst:
Schritt 1: Erzeugen, mittels PPS-Pins der GNSS-Module, die mit der Kontursendevorrichtung (4) und der Konturerkennungsvorrichtung (3) verbunden sind, von Zeitgeberimpulssignalen mit einem gleichen Zyklus T und einer gleichen Impulsbreite, und gleichzeitiges Erkennen, durch die Kontursendevorrichtung (4) und die Konturerkennungsvorrichtung (3), einer ansteigenden/abfallenden PPS-Flanke, wobei ein Versatz der Zeitgeberimpulssignale, die von unterschiedlichen GNSS-Modulen erzeugt werden, weniger als 100 ns beträgt;
Schritt 2: Halten eines Zeitfehlers zwischen der Kontursendevorrichtung (4) und der Konturerkennungsvorrichtung (3) innerhalb von 100 ns mithilfe einer Hochpräzisionseigenschaft von PPS, wobei, wenn die Kontursendevorrichtung (4) einen Impuls erzeugt, ein Magnetfelderkennungsfenster der Konturerkennungsvorrichtung (3) geöffnet wird, um ein Spannungsänderungssignal zu erfassen, um eine Konturstärke zu ermitteln;
Schritt 201: Erkennen der ansteigenden/abfallenden PPS-Flanke zu einem Zeitpunkt *t*₀ und nach einer Verzögerung *δᵣ* Erzeugen eines Impulses mit einer Breite *τ* durch die Kontursendevorrichtung (4);
Schritt 202: Erkennen der ansteigenden/abfallenden PPS-Flanke zu einem Zeitpunkt to und Öffnen des Erkennungsfensters für eine Zeit *τ* nach der Verzögerung *δₜ* durch die Konturerkennungsvorrichtung (3), um Spannungen innerhalb eines Zeitraums von *t*₀+*δₜ* bis *t*₀+*δₜ*+*τ* zu erfassen, und Berechnen eines Mittelwerts Vₐ der innerhalb des Zeitraums erfassten Spannungen;
Schritt 203: Erfassen von Spannungen innerhalb eines Zeitraums ohne Impuls von *t*₀+*δₜ*+*τ* bis zu einem nächsten durch die Kontursendevorrichtung (4) erzeugten Impuls und Verwenden eines Mittelwerts *V*_{b} der innerhalb des Zeitraums ohne Impuls erfassten Spannungen als ein Grundrauschen für die Konturstärkenerkennung; und
Schritt 204: Abziehen des innerhalb des Zeitraums ohne Impuls erlangten Grundrauschens von dem Mittelwert der innerhalb des Zeitraums mit Impuls erlangten Spannungen, um eine Konturerkennungsstärke in einem aktuellen Zyklus zu erlangen: *V*=*V*ₐ-*V*_{b}.

6. Intelligentes Rasenmähsystem nach Anspruch 5, wobei das Erzeugen eines Impulses mit einer Breite *τ* durch die Kontursendevorrichtung (4) nach einer Verzögerung *δₜ* der ansteigenden/abfallenden PPS-Flanke umfasst:
ab dem Moment des Auslösens der ansteigenden/abfallenden PPS-Flanke Erzeugen eines Sendeimpulses und Öffnen des Magnetfelderkennungsfensters durch jeweilige Einzelchip-Mikrocomputer in der Kontursendevorrichtung (4) und der Konturerkennungsvorrichtung (3), wobei eine von Systemtaktgebern der Einzelchip-Mikrocomputer weniger als eine µs innerhalb eines PPS-Impulszyklus T ist, nach dem Warten für eine Zeit *δₜ* mittels eines Systemtimers.

7. Intelligentes Rasenmähsystem nach Anspruch 6, wobei Impulssende-/-erkennungszeiten benachbarter Konturvorrichtungen durch die Taktgebung der GNSS-Module wie folgt gestaffelt sind: die Verzögerung *δₜ* ist konfigurierbar; wenn eine Verzögerung *δ*_{*t*1} durch die Kontursendevorrichtung (4) zum Erzeugen des Impulses sich von einer Verzögerung *δ*_{*t*2} durch die Konturerkennungsvorrichtung (3) zum Öffnen des Fensters unterscheidet, wird keine Kontursignalstärke in dem Magnetfelderkennungsfenster erkannt; und es werden unterschiedliche optionale Konfigurationen von *δₜ* eingestellt, und Werte von *δₜ* von benachbarten Konturen werden unterschiedlich eingestellt, sodass die Konturerkennungsvorrichtung (3) nicht fälschlicherweise ein benachbartes Kontursignal erkennt.

8. Intelligentes Rasenmähsystem nach Anspruch 5, wobei die GNSS-Module der Taktung dienen, um eine Zeitmarkierung für die kleine Kontur der Ladestation an der Kontursendevorrichtung (4) zu staffeln, um die Sende-/Erkennungszeiten der Kontur eines elektronischen Zauns und der kleine Kontur der Ladestation zu staffeln, wobei: die konfigurierbare Verzögerung *δₜ* unterschiedliche Impulszeitmarkierungen für eine Vielzahl von Konturen an der Kontursendevorrichtung (4) bereitstellt und die Ladestation (2) des Rasenmähers (1) sich an einer Begrenzung eines elektronischen Zauns des Rasens befindet, wobei zum Markieren einer Position der Ladestation (2) die Impulssende-/-erkennungszeit der kleinen Kontur der Ladestation und die Kontur eines elektronischen Zauns des Rasens gestaffelt werden; und wenn die Konturerkennungsvorrichtung (3) am Rasenmäher (1) sich nahe der Reichweite eines Kontursendesignals befindet, der Rasenmäher (1) die Position der Ladestation (2) ermittelt und eine entsprechende Aktion ausführt.

9. Intelligentes Rasenmähsystem nach Anspruch 5, wobei das Grundrauschen für die Konturstärkeerkennung in Schritt 203 eine Magnetfeldstärke ist, die in einem Zeitraum mit Zurückwerfung von gesendeten Konturimpulsen erfasst wird, und erfasst wird, um eine Magnetfeldstärke einer Umgebung ohne Konturimpulse zu bestimmen, und durch Abziehen der ohne Konturimpulse erlangten Magnetfeldstärke von Schritt 203 von der erfassten Konturmagnetfeldstärke von Schritt 202 der Einfluss eines Magnetfelds auf eine Konturerkennungswirkung reduziert wird.

10. Intelligentes Rasenmähsystem nach Anspruch 5, wobei die konfigurierbare Verzögerung *δₜ* wie folgt unterschiedliche Erkennungsstartzeitmarkierungen für eine Vielzahl von Magnetfelderkennungssensoren an der Konturerkennungsvorrichtung (3) bereitstellt:
2-3 Induktoren zum Erkennen von Positionen unterschiedlicher Teile eines Wagens in Bezug auf eine Kontur sind an dem Rasenmäher (1) angebracht und umfassen einen linken Induktor, einen rechten Induktor und einen optionalen mittleren Induktor, wobei der linke Induktor und der rechte Induktor auf zwei Seiten einer Mittellinie des Wagens des Rasenmähers (1) angeordnet sind, wobei der mittlere Induktor näher an der Mittellinie des Wagens liegt, und wobei innerhalb eines Erkennungszyklus die Magnetfelderkennungsfenster des linken Induktors, des rechten Induktors und des mittleren Induktors geöffnet werden, wenn die Verzögerung *δt* jeweils *δtₗ*, *δtᵣ* bzw. *δtₘ* beträgt, um die Magnetfeldstärken zu erlangen, die durch die einzelnen Induktoren an der Erkennungsvorrichtung (3) gemessen werden.

## Revendications

1. Système de tondeuse intelligente, comprenant une tondeuse (1), un dispositif de contour pour détecter une limite d'une pelouse, et une pile de charge (2) pour charger la tondeuse (1), le dispositif de contour comprenant un dispositif de détection de contour (3) monté sur la tondeuse (1), et un dispositif de transmission de contour (4) monté à la limite de la pelouse et correspondant au dispositif de détection de contour (3), le dispositif de transmission de contour (4) étant raccordé à un câble disposé autour de la limite de la pelouse, et le câble entourant la limite de la pelouse pour former un contour de clôture électronique et entourant la pile de charge (2) pour former un petit contour de pile de charge ;
la tondeuse (1) comprenant une enveloppe (11), un dispositif d'entraînement (12), et un ensemble de tonte (13) ; l'ensemble de tonte (13) comprenant un arbre de tonte (131), un dispositif d'entraînement de tonte (132), et des lames de tonte (134) montées sur l'arbre de tonte (131), le dispositif d'entraînement de tonte (132) étant utilisé pour entraîner l'arbre de tonte (131), et l'arbre de tonte (131) entraînant les lames de tonte (134) pour tondre la pelouse ;
dans lequel :
l'ensemble de tonte (13) comprend en outre un support de lame de tonte (135) monté autour de l'arbre de tonte (131), une pluralité de tiges de fixation (136) soutenues et montées dans le support de lame de tonte (135), des barres de lames (138) montées de manière mobile sur les tiges de fixation (136) au moyen de douilles de guidage élastiques (137) et capables de s'étirer vers l'extérieur par l'intermédiaire de trous de guidage (1351) dans le support de lame de tonte (135), et les lames de tonte (134) sont montées aux extrémités, éloignées des tiges de fixation (136), des barres de lames (138) ; quand la tondeuse est en marche, les barres de lames (138) s'étirent vers l'extérieur par l'intermédiaire des trous de guidage (1351) sous l'effet centrifuge, puis les lames de tonte (134) tondent la pelouse ;
la tondeuse comprend en outre un dispositif de nivellement auxiliaire (14) proximal de l'ensemble de tonte (13) et monté dans l'enveloppe (11), le dispositif de nivellement auxiliaire (14) comprenant un dispositif d'entraînement de nivellement (142), et un dispositif de nivellement et de tonte (141), le dispositif de nivellement et de tonte (141) comprenant un arbre d'entraînement de nivellement (1411) disposé horizontalement et un châssis de tonte en spirale (1412) fixé autour de l'arbre d'entraînement de nivellement (1411), et des lames de nivellement (1413) montées sur le châssis de tonte en spirale (1412) de manière espacée ;
des modules GNSS sont raccordés au dispositif de transmission de contour et au dispositif de détection de contour (3) dans le dispositif de contour pour fournir une temporisation de haute précision à une fréquence spécifique.

2. Système de tondeuse intelligente selon la revendication 1, dans lequel un ensemble de fertilisation et d'irrigation (15) est monté dans l'enveloppe (11) de la tondeuse (1) et comprend une cavité de stockage (151), et un réservoir de fertilisation et d'irrigation (152) en communication avec la cavité de stockage (151) et agencé au-dessus du châssis de tonte en spirale (1412), et une sortie d'évacuation (1521) est formée dans la partie inférieure du réservoir de fertilisation et d'irrigation (152).

3. Système de tondeuse intelligente selon la revendication 1, dans lequel une enveloppe intérieure (16) située à l'extérieur du support de lame de tonte (135) est montée dans l'enveloppe (11) de la tondeuse (1), et l'arbre de tonte (131) pénètre à travers le sommet de l'enveloppe intérieure (16) pour être raccordé au dispositif d'entraînement de tonte (132).

4. Système de tondeuse intelligente selon la revendication 1, dans lequel le support de lame de tonte (135) est une structure de support polygonale sur l'ensemble, l'angle d'une plaque inférieure inclinée (1352) du support de lame de tonte (135) par rapport à un sol horizontal est inférieur à 30°, et l'angle d'une plaque supérieure inclinée (1353) du support de lame de tonte (135) par rapport au sol horizontal est supérieur à 45°.

5. Système de tondeuse intelligente selon la revendication 1, dans lequel le dispositif de détection de contour (3) ouvre une fenêtre de détection de champ magnétique quand le dispositif de transmission de contour (4) transmet une impulsion de contour, de sorte que la synchronisation temporelle entre le dispositif de transmission de contour (4) et le dispositif de détection de contour (3) est accomplie, et la synchronisation temporelle comprend les étapes suivantes :
Étape 1 : génération, par les broches PPS des modules GNSS raccordés au dispositif de transmission de contour (4) et le dispositif de détection de contour (3), de signaux d'impulsion temporels avec un même cycle T et une même largeur d'impulsion, et détection, par le dispositif de transmission de contour (4) et le dispositif de détection de contour (3), d'un bord montant/bord descendant de PPS dans le même temps, dans lequel le décalage des signaux d'impulsion temporels générés par différents modules GNSS est inférieur à 100 ns ;
Étape 2 : maintien d'une erreur temporelle entre le dispositif de transmission de contour (4) et le dispositif de détection de contour (3) à moins de 100 ns au moyen de caractéristiques de haute précision de PPS, et quand le dispositif de transmission de contour (4) génère une impulsion, ouverture d'une fenêtre de détection de champ magnétique du dispositif de détection de contour (3) pour recueillir un signal de changement de tension afin d'obtenir une intensité du contour :
Étape 201 : détection du bord montant/bord descendant de PPS à un moment *t*₀ et génération d'une impulsion avec une largeur *τ* après un retard *δₜ*, par le dispositif de transmission de contour (4) ;
Étape 202 : détection du bord montant/bord descendant de PPS au moment t₀ et ouverture de la fenêtre de détection pour un moment *τ* après le retard *δₜ*, par le dispositif de détection de contour (3), de façon à recueillir les tensions dans une période de t₀ + *δₜ* à *t₀* + *δₜ* + *τ*, et calcul d'une valeur moyenne *V*ₐ des tensions recueillies dans la période ;
Étape 203 : recueil des tensions dans une période sans l'impulsion de t₀ + *δₜ* + *τ* à une impulsion suivante générée par le dispositif de transmission de contour (4), et utilisation d'une valeur moyenne *V*_{b} des tensions recueillies dans la période sans l'impulsion comme plancher de bruit pour la détection de l'intensité du contour ; et
Étape 204 : soustraction du plancher de bruit obtenu dans la période sans l'impulsion à la valeur moyenne des tensions recueillies dans la période avec l'impulsion pour obtenir une intensité de détection du contour dans un cycle de courant : *V* = *V*ₐ - *V*_{b}.

6. Système de tondeuse intelligente selon la revendication 5, dans lequel la production d'une impulsion avec une largeur *τ* par le dispositif de transmission de contour (4) après un retard *δₜ* du bord montant/bord descendant de PPS comprend :
à partir du moment où le bord montant/bord descendant de PPS est déclenché, la production d'une impulsion de transmission et l'ouverture de la fenêtre de détection de champ magnétique, respectivement, par des micro-ordinateurs monopuces dans le dispositif de transmission de contour (4) et le dispositif de détection de contour (3), une différence des horloges du système de micro-ordinateurs monopuces étant inférieure à un niveau de µs dans un cycle T d'impulsion PPS, après l'attente d'une durée *δₜ* au moyen d'une horloge système.

7. Système de tondeuse intelligente selon la revendication 6, dans lequel les durées de transmission/détection d'impulsion des dispositifs de contour adjacents sont échelonnées par la temporisation des modules GNSS, avec les éléments suivants: le retard *δt* est configurable ; si un retard *δₜ₁* adopté par le dispositif de transmission de contour (4) pour générer l'impulsion est différent d'un retard *δt*₂ adopté par le dispositif de détection de contour (3) pour ouvrir la fenêtre, aucune intensité de signal du contour n'est détectée au niveau de la fenêtre de détection de champ magnétique; et différentes configurations optionnelles de *δt* sont définies, et les valeurs de *δt* des contours adjacents sont définies comme étant différentes, de sorte que la détection par erreur d'un signal de contour adjacent par le dispositif de détection de contour (3) est empêchée.

8. Système de tondeuse intelligente selon la revendication 5, dans lequel les modules GNSS sont utilisés pour la temporisation afin de fournir une marque temporelle au petit contour de pile de charge sur le dispositif de transmission de contour (4) afin qu'il échelonne les moments de transmission/détection du contour de clôture électronique et le petit contour de pile de charge ; avec les éléments suivants : le retard configurable *δt* fournit différentes marques temporelles d'impulsion pour une pluralité de contours sur le dispositif de transmission de contour (4), et la pile de charge (2) de la tondeuse (1) est située à une limite d'une clôture électronique de la pelouse ; afin de marquer une position de la pile de charge (2), les moments de transmission/détection d'impulsion du petit contour de pile de charge et du contour de clôture électronique de la pelouse sont échelonnés ; et quand le dispositif de détection de contour (3) sur la tondeuse (1) est proximal de la portée d'un signal de contour transmission, la tondeuse (1) obtient la position de la pile de charge (2) et entreprend une action correspondante.

9. Système de tondeuse intelligente selon la revendication 5, dans lequel le plancher de bruit de détection d'intensité du contour à l'Étape 203 est une intensité de champ magnétique recueillie dans une période temporelle avec une répulsion par rapport à la transmission de l'impulsion de contour, et est recueillie pour déterminer une intensité de champ magnétique d'un environnement ambiant en l'absence d'impulsions de contour, et en soustrayant l'intensité de champ magnétique obtenue en l'absence des impulsions de contour à l'Étape 203 aux intensités de champ magnétique de contour recueillies à l'Étape 202, l'influence d'un champ magnétique sur un effet de détection de contour est réduite.

10. Système de tondeuse intelligente selon la revendication 5, dans lequel le retard configurable *δt* fournit différentes marques temporelles de début de détection à une pluralité de capteurs de champ magnétique sur le dispositif de détection de contour (3) par les éléments suivants :
2-3 inducteurs pour détecter des positions de différentes parties d'un chariot par rapport à un contour sont montés sur la tondeuse (1) et comprennent un inducteur gauche, un inducteur droit et un inducteur central optionnel, dans lequel l'inducteur gauche et l'inducteur droit sont situés sur deux côtés d'une ligne centrale du chariot de la tondeuse (1), l'inducteur central est proche de la ligne centrale du chariot, et dans un cycle de détection, les fenêtres de détection de champ magnétique de l'inducteur gauche, l'inducteur droit et l'inducteur central sont ouvertes quand le retard*δt* est *δtₗ, δtᵣ et δtₘ* respectivement, afin d'obtenir des intensités de champ magnétique détectées par tous les inducteurs sur le dispositif de détection (3).
